# EUROPEAN PATENT SPECIFICATION

(11) **EP 3 428 492 B1**
(45) Date of publication and mention of the grant of the patent: **15.01.2020**
(21) Application number: 17180749.8
(22) Date of filing: 11.07.2017
(51) Int. Cl.: F16K 17/04, F16J 13/24, F16J 15/06, F16J 15/08, F16K 17/14, B33Y 80/00

(54) **SEALING CAP**
VERSCHLUSSKAPPE
BOUCHON D'ÉTANCHÉITÉ

(43) Date of publication of application: 16.01.2019
(73) Proprietor: Siemens Aktiengesellschaft, 80333 München (DE)
(72) Inventor: BOE, Ove, 7549 Tanem (NO); HAMSTAD, Haavard, 7036 Trondheim (NO); SKAGEN, Peter, 5035 Bergen (NO)

(56) References cited:
- WO-A1-2015/113789
- WO-A1-2016/126455
- US-A- 2 857 073
- US-A- 3 690 505
- US-A- 4 694 859
- US-A1- 2003 189 053
- US-A1- 2010 096 392
- US-A1- 2015 252 905

## Description

### TECHNICAL FIELD

The present invention relates generally to a valve arrangement of a subsea device.

### BACKGROUND

Safety and reliability are two key design parameters of any product or system. While for some applications safety requirements play a less important role, for example because the product or system in itself is non-hazardous, does not contain hazardous materials and is used exclusively in a non-hazardous environment, most products or systems need to be designed carefully so as to not create unnecessary risk for their operators or any third party, or the environment. Likewise, a limited reliability may be acceptable for some products and systems, for example products or systems that have short renewal cycles such as consumer electronics, whereas for other applications a high reliability is required. In most cases increasing safety and reliability of a product or system will lead to increased cost, and while it is typically out of the question to not implement a safety measure for its cost the same is not necessarily true for reliability.

Some fields of application however operate under the highest standards both in terms of safety and reliability. One such field of application is subsea technology where it is of utmost importance to protect the sensitive environment, to protect the humans operating the often bulky and often pressurized equipment, and to provide reliable and long-lasting products and systems.

One class of subsea devices will be filled with oil at the end of the production process thereby providing inner hull stability to the subsea device by the incompressible oil when the subsea device is subjected to the enormous pressures at great water depths, e.g. about 300 bar at 3000 m.

For that the subsea device will have a filling channel which needs to be sealed to stop seawater from ingressing into the filling channel and contaminating the oil. Likewise the considerable amounts of oil used for the filling of subsea devices must not leak into the environment. At the same time the crew retrieving a failed subsea device must be protected against overpressures that may build up inside the subsea device.

US 2010/096392 A1 discloses a sealing structure for a high-pressure hydrogen gas container suitable for a vehicle, which is used to supply hydrogen to a fuel cell wherein a cylindrical fixing flange structure for a high-pressure gas container filled with high-pressure gas comprises a high-pressure side primary seal zone provided with a flange end face seal serving as a metal tough seal and an atmosphere-side secondary seal zone provided with an elastomeric seal.

US 2015/252905 A1 discloses a valve for a subsea pressure canister and in particular a valve for controlling a fluid flow into the subsea pressure canister or out of the subsea pressure canister, for example for filling the subsea pressure canister with a gas like SF6 or for removing the gas from the canister. The valve includes a double sealing including at least a metal seal.

WO 2015/113789 A1 discloses a pressure relief valve for a subsea pressure canister or a subsea vessel comprising a metal seal.

It is an object of the present invention to provide a valve arrangement that reliably provides a sealing of an opening of a subsea device.

### SUMMARY

In accordance with the present invention there is provided a valve arrangement for a subsea device comprising a seat valve, a spring exerting a valve shutting force on the seat valve and a sealing cap comprising a cap body which comprises a first cylindrical cap section having a first annular groove and a metal C-ring seal of the axial seal type arranged in said first groove which, when the sealing cap is applied to an opening to be sealed, is in contact with an inner circumference of a first cylindrical section of said opening thereby radially sealing the opening. The sealing cap is held in position by a weak link the durability of which is smaller than the valve shutting force of the spring thereby providing overpressure protection by allowing gasses or fluids from within the subsea device having a pressure greater than the shutting force to force the cap out of position and dissipate. The seat valve and the radial sealing provided by the metal C-ring seal of the sealing cap form at least two barriers between the seawater and the filling fluid or gas inside the subsea device

In an embodiment of the invention the cap body of the sealing cap is a two-part body wherein the first groove is formed between the two parts of the body for easy manufacturing. Unlike an elastomeric seal which can be applied to a groove over a much larger outer diameter such application of a metal seal is often not possible. In another embodiment the cap body is manufactured by way of additive manufacturing (also known as 3D printing) in and around the metal seal.

In a preferred embodiment of the present invention the sealing cap itself provides two barriers in that the cap body further comprises a second annular groove in the first or in a second cylindrical cap section and an elastomeric O-ring seal arranged in said second groove which, when the sealing cap is applied to said opening, is in contact with a second inner circumference of the first or a second cylindrical section of said opening thereby providing a second sealing of the opening.

### BRIEF DESCRIPTION OF THE DRAWINGS

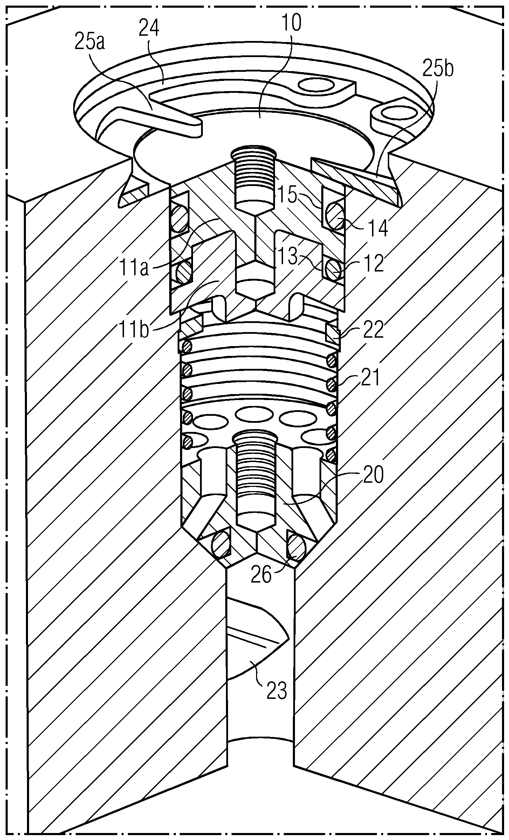

Fig. 1 is a schematic illustration of a filling channel of a subsea device comprising a sealing cap in accordance with the present invention.

### DETAILED DESCRIPTION

Referring to Fig. 1 there is shown a filling channel of a subsea device which is equipped with a seat valve having a body 20 which in normal operating conditions is held in place by a spring 21 which in turn is held in place in the filling channel by a Seeger ring 22.

During the filling process which occurs at the end of the (topside) production process of the subsea device or at the end of a (topside) repair of the subsea device a filling tool lifts the seat valve body 20 and fills the subsea device with oil or another dielectric liquid or a (isolating) gas via a flow channel 23.

When the filling process is complete the valve body 20 is released by the filling tool thereby closing off the filling channel. Valve body 20 may comprise an elastomeric seal 26 to improve the sealing of the seat valve.

After valve body 20 is released and the filling tool has been removed a sealing cap 10 is applied to the filling channel's opening in order to provide at least one additional barrier between the surrounding seawater and the oil (or dielectric fluid, or gas) filling of the subsea device when it is submerged.

In an embodiment of the present invention sealing cap 10 has a two-part body 11a, 11b to facilitate assembly of the sealing cap.

A first cap element 11b has cylindrical section which constitutes a first part of a first cylindrical cap section having a first outer diameter which is marginally smaller than the inner diameter of the cylindrical opening the cap is supposed to seal so that the first cap element 11b by itself can move with little or no friction inside said opening.

First cap element 11b has another cylindrical section which constitutes a third cylindrical cap section having a third diameter, wherein the third diameter is smaller than the first diameter. Upon this third cylindrical section an axial seal type metal C-ring seal 12 is arranged. The dimension of the C-ring annular seal 12 is such that its inner diameter is slightly smaller than the third diameter and its outer diameter is greater than the first diameter and slightly greater than the inner diameter of the cylindrical opening the cap is supposed to seal.

In other words when the sealing cap 10 is installed the C-ring seal 12 along its inner circumference presses against an outer circumference of the third cylindrical cap section and simultaneously along its outer circumference presses against an inner circumference of the cylindrical opening thereby sealing the gap left between the body of the sealing cap and the opening.

C-ring metal seals are often made of spring steel to increase flexibility while at the same time exerting force against forces pressing the two "legs" of the C together.

As mentioned above C-ring 12 is of the axial seal type meaning that the "C" is open in axial direction (i.e. the C is open on top or bottom of the C-ring if it lies on a flat surface). Such metal C-ring axial seals are also referred to as MCA seals by some manufacturers of such metal seals.

A second cap element 11a is provided to keep the C-ring metal seal in place during the process of attaching or removing the cap. In detail, the second cap element 11a has a second part of the overall first cylindrical section, again having a diameter which is marginally smaller than the inner diameter of the cylindrical opening the cap is supposed to seal so that the second cap element 11a by itself can move with little or no friction inside said opening.

Second cap element 11a is attached to the first cap element 11b such that a first annular groove 13 is formed by the third cylindrical cap section arranged between the first part of said first cylindrical cap section and the second part of said first cylindrical section, and metal C-ring seal 12 rests in this groove. The two parts of the seal body can be connected using any known method including but not limited to threaded connections, press-fitting or parallel key fitting. The two parts of the seal body are preferably made from stainless steel because this is a corrosion-resistant inexpensive material that can easily be processed with high precision. In other embodiments the parts of the seal body may be made of different metals or other materials. The C-ring is preferably made of spring steel and may be coated with a softer metal such as silver to increase tightness of the seal but may of course be made of other metals strong enough to reliably withstand the operating pressures of the respective application.

In other embodiments the seal body is one piece constructed in and around the C-ring using some form of 3D printing or additive manufacturing.

If a sealing cap 10 in accordance with the invention is applied in the opening of the filling channel the filling channel has two barriers, one elastomeric at the bottom of seat valve body 20 and one metallic by virtue of cap 10.

In an embodiment of the invention the cap itself is constructed to provide a double barrier. For this the body of sealing cap 10 comprises a second annular groove 15 which may be arranged in the same, first cylindrical cap section or in a different, second cylindrical cap section and an elastomeric O-ring seal 14 is arranged in said second groove which, when the sealing cap is applied to said opening, is in contact with a second inner circumference of the first or a second cylindrical section of said opening thereby providing a second sealing of the opening.

As the installation of an elastomeric O-ring is much easier than that of a metal C-ring the second groove does not need to be constructed using a two-piece body.

In the embodiment depicted in Fig. 1 the first and second diameters of the first cylindrical cap section and the second cylindrical cap section are similar or even equal and the filling channel has a constant diameter at least in the area where the cap will be installed. It should be noted that while such a construction may have advantages, other embodiments provide for different first and second diameters, for example a second cylindrical cap section having a larger second diameter corresponding to a larger inner diameter of a second channel section towards the outer end of the cap.

After installing the sealing cap 10 in the filling channel it is in accordance with the present invention secured with a weak link 24 which in the preferred embodiment is a C-type spring ring for easy installation in and removal from a corresponding groove at the outer end of the filling channel. The weak link is effected by two fingers 25a, 25b formed towards the center of the spring ring 24 which will bend or break off and release the cap if a pressure inside the subsea device becomes too large (i.e. exceeds a predefined pressure which i.a. is determined by the spring force of spring 21) and the seat valve 20 opens to release the pressure. Thus the seat valve 20 and the cap 10 in conjunction operate as a pressure relief valve. This pressure relief is a safety measure especially useful if a faulty subsea device having (unwanted) gas inside is retrieved from the bottom of the sea. At the bottom of the sea the gas was contained by the subsea pressure but may lead to explosive relief when the subsea device is retrieved relatively quickly. Such explosive relief is prevented with the valve/cap combination of the present invention. Instead a controlled relief occurs by the internal pressure causing the seat valve to open and displacing cap 10.

While the present invention is particularly useful in the subsea environment it may of course be applied in many other contexts where reliable sealing caps are required.

## Claims

1. Valve arrangement for a subsea device having an opening to be sealed, the valve arrangement comprising a seat valve (20), a spring (21) exerting a valve shutting force on the seat valve, and a sealing cap (10), **characterised in that** the sealing cap (10) comprises: a cap body (11a, 11b), the cap body comprising
- a first cylindrical cap section;
- a first annular groove (13) in said first cylindrical cap section; and
- a metal C-ring seal of the axial seal type (12) arranged in said first groove which, when the sealing cap (10) is applied to the opening to be sealed, is in contact with an inner circumference of a first cylindrical section of said opening thereby radially sealing the opening,
wherein the sealing cap (10) is held in position by a weak link the durability of which is smaller than the valve shutting force of the spring (21) thereby providing overpressure protection by allowing gasses or fluids from within the subsea device having a pressure greater than the shutting force to force the cap out of position and dissipate, and wherein the seat valve (20) and the radial sealing provided by the metal C-ring seal (12) of the sealing cap form at least two barriers between the seawater and the filling fluid or gas inside the subsea device.

2. The valve arrangement of claim 1, wherein the cap body of the sealing cap comprises
- a first cap element (11b) comprising a first part of said first cylindrical cap section having a first diameter and a third cylindrical cap section having a third diameter, wherein the third diameter is smaller than the first diameter;
- the axial seal type metal C-ring seal (12) arranged on the third cylindrical cap section and having an inner diameter that is smaller than the third diameter and an outer diameter that is greater than the first diameter; and
- a second cap element (11a) comprising a second part of said first cylindrical section;
wherein the second cap element (11a) is attached to the first cap element (11b) such that said first annular groove (13) is formed by the third cylindrical cap section arranged between the first part of said first cylindrical cap section and the second part of said first cylindrical cap section.

3. The valve arrangement of claim 2, wherein the second cap (11b) element is attached to the first cap element (11a) by either of threaded connection or press-fit or parallel key fitting.

4. The valve arrangement of claim 1, wherein the cap body (11a, 11b) of the sealing cap is formed in one piece by additive manufacturing the cap body in and around the metal C-ring seal of the axial seal type (12).

5. The valve arrangement of any of the preceding claims, wherein the cap body (11a, 11b) of the sealing cap further comprises
- a second annular groove (15) in the first or in a second cylindrical cap section; and
- an elastomeric O-ring seal (14) arranged in said second groove which, when the sealing cap is applied to said opening, is in contact with a second inner circumference of the first or a second cylindrical section of said opening thereby providing a second sealing of the opening.

6. The valve arrangement of claim 5, when depending on claims or 3, wherein the second annular groove is formed in the second cap element (11a).

7. The valve arrangement of any of the preceding claims, wherein the weak link is a C-shape spring plate (24) having one or more fingers (25a, 25b) holding the cap in position under normal operation conditions.

## Patentansprüche

1. Ventilanordnung für eine unterseeische Vorrichtung mit einer abzudichtenden Öffnung, wobei die Ventilanordnung ein Sitzventil (20), eine eine Ventilschließkraft auf das Sitzventil ausübende Feder (21) und eine Verschlusskappe (10) umfasst, **dadurch gekennzeichnet, dass** die Verschlusskappe (10) Folgendes umfasst:
einen Kappenhauptteil (11a, 11b), der Folgendes umfasst:
- einen ersten zylinderförmigen Kappenabschnitt,
- eine erste Ringnut (13) in dem ersten zylinderförmigen Kappenabschnitt und
- eine C-Metallringdichtung (12) vom Axialdichtungstyp, die in der ersten Nut angeordnet ist und, wenn die Verschlusskappe (10) für die abzudichtende Öffnung verwendet wird, einen Innenumfang eines ersten zylinderförmigen Abschnitts der Öffnung berührt und die Öffnung dadurch radial abdichtet,
wobei die Verschlusskappe (10) durch eine schwache Verbindung, die weniger dauerhaft ist als die Ventilschließkraft der Feder (21), in Position gehalten wird und dadurch vor Überdruck schützt, indem sie ermöglicht, dass Gase oder Flüssigkeiten aus der unterseeischen Vorrichtung, die unter einem größeren Druck als die Schließkraft stehen, die Kappe aus ihrer Position drücken und abgeleitet werden, und wobei das Sitzventil (20) und die radiale Abdichtung durch die C-Metallringdichtung (12) der Verschlusskappe mindestens zwei Barrieren zwischen dem Meerwasser und der Füllflüssigkeit beziehungsweise dem Füllgas in der unterseeischen Vorrichtung bilden.

2. Ventilanordnung nach Anspruch 1, wobei der Kappenhauptteil der Verschlusskappe Folgendes umfasst:
- ein erstes Kappenelement (11b), das einen ersten Teil des ersten zylinderförmigen Kappenabschnitts mit einem ersten Durchmesser und einen dritten zylinderförmigen Kappenabschnitt mit einem dritten Durchmesser umfasst, wobei der dritte Durchmesser kleiner ist als der erste,
- die C-Metallringdichtung (12) vom Axialdichtungstyp, die an dem dritten zylinderförmigen Kappenabschnitt angeordnet ist und einen Innendurchmesser, der kleiner ist als der dritte Durchmesser, und einen Außendurchmesser aufweist, der größer ist als der erste Durchmesser, und
- ein zweites Kappenelement (11a), das einen zweiten Teil des ersten zylinderförmigen Abschnitts umfasst,
wobei das zweite Kappenelement (11a) so an dem ersten Kappenelement (11b) angebracht ist, dass die erste Ringnut (13) von dem dritten zylinderförmigen Kappenabschnitt gebildet wird, der zwischen dem ersten Teil und dem zweiten Teil des ersten zylinderförmigen Kappenabschnitts angeordnet ist.

3. Ventilanordnung nach Anspruch 2, wobei das zweite Kappenelement (11b) entweder durch eine Schraubverbindung oder durch Presssitz oder Passfederverbindung an dem ersten Kappenelement (11a) angebracht ist.

4. Ventilanordnung nach Anspruch 1, wobei der Kappenhauptteil (11a, 11b) der Verschlusskappe durch generative Fertigung in der und um die C-Metallringdichtung (12) vom Axialdichtungstyp herum einstückig ausgebildet ist.

5. Ventilanordnung nach einem der vorhergehenden Ansprüche, wobei der Kappenhauptteil (11a, 11b) der Verschlusskappe ferner Folgendes umfasst:
- eine zweite Ringnut (15) in dem ersten oder einem zweiten zylinderförmigen Kappenabschnitt und
- eine O-Ring-Elastomerdichtung (14), die in der zweiten Nut angeordnet ist und, wenn die Verschlusskappe für die Öffnung verwendet wird, einen zweiten Innenumfang des ersten oder eines zweiten zylinderförmigen Abschnitts der Öffnung berührt und dadurch für eine zweite Abdichtung der Öffnung sorgt.

6. Ventilanordnung nach Anspruch 5 bei Abhängigkeit von Anspruch 2 oder 3, wobei die zweite Ringnut in dem zweiten Kappenelement (11a) ausgebildet ist.

7. Ventilanordnung nach einem der vorhergehenden Ansprüche, wobei es sich bei der schwachen Verbindung um einen C-förmigen Federteller (24) mit einem oder mehreren Fingern (25a, 25b) handelt, die die Kappe unter normalen Einsatzbedingungen in Position halten.

## Revendications

1. Agencement de vanne pour un dispositif sous-marin ayant une ouverture à obturer, l'agencement de vanne comprenant une vanne à siège (20), un ressort (21) exerçant une force de fermeture de vanne sur la vanne à siège, et une calotte d'obturation (10), **caractérisé en ce que** la calotte d'obturation (10) comprend :
un corps de calotte (11a, 11b), le corps de calotte comprenant
- une première section de calotte cylindrique ;
- une première rainure annulaire (13) dans ladite section de calotte cylindrique ; et
- un joint d'étanchéité annulaire en C métallique du type joint d'étanchéité axial (12) agencé dans ladite première rainure qui, lorsque la calotte d'obturation (10) est appliquée sur l'ouverture à obturer, est en contact avec une circonférence interne d'une première section cylindrique de ladite ouverture, obturant ainsi dans le sens radial l'ouverture, dans lequel la calotte d'obturation (10) est maintenue en position par un maillon faible dont la durabilité est plus basse que la force de fermeture de vanne du ressort (21), fournissant ainsi une protection contre la surpression en permettant à des gaz ou des fluides en provenance de l'intérieur du dispositif sous-marin présentant une pression supérieure à la force de fermeture de déplacer la calotte en la poussant et de se dissiper,
et dans lequel la vanne à siège (20) et l'obturation radiale fournie par le joint d'étanchéité annulaire en C métallique (12) de la calotte d'obturation forment au moins deux barrières entre l'eau de mer et le fluide ou le gaz de remplissage à l'intérieur du dispositif sous-marin.

2. Agencement de vanne selon la revendication 1, dans lequel le corps de calotte de la calotte d'obturation comprend
- un premier élément de calotte (11b) comprenant une première partie de ladite première section de calotte cylindrique présentant un premier diamètre et une troisième section de calotte cylindrique présentant un troisième diamètre, dans lequel le troisième diamètre est plus petit que le premier diamètre ;
- le joint d'étanchéité annulaire en C métallique de type joint d'étanchéité axial (12) agencé sur la troisième section de calotte cylindrique et présentant un diamètre interne qui est plus petit que le troisième diamètre et un diamètre externe qui est plus grand que le premier diamètre ; et
- un second élément de calotte (11a) comprenant une seconde partie de ladite première section cylindrique ;
dans lequel le second élément de calotte (11a) est fixé au premier élément de calotte (11b) de telle sorte que ladite première rainure annulaire (13) est formée par la troisième section de calotte cylindrique agencée entre la première partie de ladite première section de calotte cylindrique et la seconde partie de ladite première section de calotte cylindrique.

3. Agencement de vanne selon la revendication 2, dans lequel le second élément de calotte (11b) est fixé au premier élément de calotte (11a) soit par un raccordement fileté soit par un ajustement par pression soit par un ajustement à clavettes parallèles.

4. Agencement de vanne selon la revendication 1, dans lequel le corps de calotte (11a, 11b) de la calotte d'obturation est formé d'une seule pièce par fabrication additive du corps de calotte dans et autour du joint d'étanchéité annulaire en C métallique du type joint d'étanchéité axial (12).

5. Agencement de vanne selon l'une quelconque des revendications précédentes, dans lequel le corps de calotte (11a, 11b) de la calotte d'obturation comprend en outre
- une seconde rainure annulaire (15) dans la première ou dans une seconde section de calotte cylindrique ; et
- un joint d'étanchéité torique élastomère (14) agencé dans ladite seconde rainure qui, lorsque la calotte d'obturation est appliquée sur ladite ouverture, est en contact avec une seconde circonférence interne de la première ou d'une seconde section cylindrique de ladite ouverture, fournissant ainsi une seconde obturation de l'ouverture.

6. Agencement de vanne selon la revendication 5, lorsqu'elle dépend des revendications 2 ou 3, dans lequel la seconde rainure annulaire est formée dans le second élément de calotte (11a) .

7. Agencement de vanne selon l'une quelconque des revendications précédentes, dans lequel le maillon faible est une plaque à ressort en forme de C (24) ayant un ou plusieurs doigts (25a, 25b) maintenant la calotte en position dans des conditions de fonctionnement normal.
